# EUROPEAN PATENT APPLICATION

(11) **EP 0 823 710 A2**
(43) Date of publication of application: **11.02.1998**
(21) Application number: 97303707.0
(22) Date of filing: 30.05.1997
(51) Int. Cl.: G11B 27/30, H04N 5/85

(54) **Apparatus and method for the restoration of sync data in a digital video disc playback system**

(30) Priority: 09.08.1996 KR 9633234
(71) Applicant: Samsung Electronics Co., Ltd., Suwon-city, Kyungki-do (KR)
(72) Inventor: Oh, Cheol-Gyoon, Gunpo-City, Kyungki-Do (KR)
(74) Representative: Neill, Alastair William

(57) **Abstract**

A sync data restoring apparatus and method for restoring normally data recorded on a digital video disc (DVD) despite damaged sync data in a digital video disc playback system is disclosed. The present invention provides an apparatus which can determines whether sync data is normal or not using an window signal and restore quasi sync data substituted for the abnormal sync data as sync data if sync data is abnormal in DVD playback system, thereby to enable normal reproduction of data despite damaged sync data in a DVD playback system.

## Description

The present invention relates to a digital video disc playback system, and more particularly to a sync data restoring apparatus and method. In preferred embodiments of the present invention, such apparatus and method are capable of restoring normally data recorded on a digital video disc (DVD) despite damaged sync data in a digital video disc playback system.

The basic technology of the optical disc for reading data in a non-contacting manner using a laser light has been greatly developed since its establishment about 20 years ago. As a result, currently compact disc (hereinbelow, referred to as CD) having the one side disc structure of a diameter of 120mm and a thickness of 1.2mm is spreading and used widely. It is possible to record data of approximately 640Mbyte on one side of such an CD. In the technical field of the optical disc, both making an optical disc for a high rotating speed, making overwrite and an optical disc high in density (increased storage capacity) caused by the development of a short-wavelength laser or a recording playback technology is gradually developed without being limited to only a development of such a CD, a storage medium, for example, a Digital Video Disc (hereinbelow, referred to as DVD) has recently been introduced. Comparing DVD with CD a common point is the one side disc structure of a diameter of 120mm and a thickness of 1.2mm but the DVD has a feature that it can record much more data(about 6 times; data of 4.7GByte) compared to CD's. Accordingly, DVD is a recording medium suitable for an optical system for the next generation in which an increase in the amount of information which can be dealt with is required.

However, as DVD related technologies have required a record and reproduction of high density, if a small glitch is generated or an error of sync data during reproduction, users confront problems including the possibility of a fatal condition in which is impossible to reproduce data normally. Further, technology which enables normal reproduction of data recorded on a disc despite damaged sync data is required.

It is therefore an aim of preferred embodiments of the present invention to provide an apparatus and method for restoring normally sync data damaged in a DVD playback system.

It is a further aim of preferred embodiments of the present invention to provide a sync data restoring apparatus for enabling normal reproduction of data despite damaged sync data in a DVD playback system.

It is still another aim of preferred embodiments of the present invention to provide an apparatus and method for preventing a synchronization of data due to the damage of sync data in a DVD playback system.

According to a first aspect of the present invention, there is provided a sync data restoring apparatus in a DVD playback system, comprising: a sync detecting unit for detecting a frame synchronizing codeword and an ID synchronizing codeword from predetermined EFM plus data and outputting a detected frame synchronizing signal and a detected ID synchronizing signal at the time when said codes are detected; a quasi frame sync generating unit for generating a quasi frame synchronizing signal in a preset time unit on the basis of said detected frame synchronizing signal; a frame sync restoring unit for determining the degree of approximation of said detected frame synchronizing signal to said quasi frame synchronizing signal, selecting any one frame synchronizing signal of said detected frame synchronizing signal and said quasi frame synchronizing signal according to the determined results and outputting said selected one as a frame synchronizing signal restored; a quasi ID sync generating unit for generating a quasi ID synchronizing signal in a preset time unit on the basis of a frame synchronizing signal at a preset time of a series of said restored frame synchronizing signals; an ID sync restoring unit for determining the degree of approximation of said detected ID synchronizing signal to said quasi ID synchronizing signal, selecting any one ID synchronizing signal of said detected ID synchronizing signal and said quasi ID synchronizing signal according to the determined results and outputting said selected one as a ID synchronizing signal restored.

Suitably, said frame sync restoring unit outputs said detected frame synchronizing signal as a frame synchronizing signal restored if said detected frame synchronizing signal approximates said quasi frame synchronizing signal by a preset width and outputs said quasi frame synchronizing signal as a frame synchronizing signal restored if said detected frame synchronizing signal does not approximate said quasi frame synchronizing signal by a preset width.

Suitably, said ID sync restoring unit outputs said detected ID synchronizing signal as an ID synchronizing signal restored if said detected ID synchronizing signal approximates said quasi ID synchronizing signal by a preset width and outputs said quasi ID synchronizing signal as a ID synchronizing signal restored if said detected ID synchronizing signal does not approximate said quasi ID synchronizing signal by a preset width.

Suitably, said quasi frame sync generating unit generates the first quasi frame synchronizing signal on a basis of said detected frame synchronizing signal and then generates a quasi frame synchronizing signal every 1488 T(here, TTS channel clock).

Suitably, said quasi frame sync generating unit comprises a counter generating the first quasi frame synchronizing signal on a basis of said detected frame synchronizing signal and then generating a quasi frame synchronizing signal every time 1488 is counted by counting 1488 T(channel clock).

Suitably, said frame sync restoring unit resets said quasi frame sync generating unit so that said quasi frame sync generating unit operates again on a basis of said detected frame synchronizing signal if the number of the detected frame synchronizing signal existing without a predetermined range of the frame window is more than the number preset by a microcomputer.

Suitably, said quasi ID sync generating unit comprises a counter generating the first quasi ID synchronizing signal on a basis of the 26th restored frame synchronizing signal of a series of said restored frame synchronizing signals and then generating a quasi ID synchronizing signal every time 26 is counted by counting the time required for the restoration of the second frame synchronizing signal after the first restoration of a frame synchronizing signal.

Suitably, said ID sync restoring unit resets said quasi ID sync generating unit so that said quasi ID sync generating unit operates again on a basis of said restored frame synchronizing signal if the detected ID synchronizing signal exists without a predetermined range of the ID window to thereby go off the location preset by the microcomputer.

According to a second aspect of the present invention, there is also provided a sync data restoring apparatus in a DVD playback system, comprising: a sync detecting unit for detecting synchronizing codes (a frame sync and an ID sync) codeword from predetermined EFM plus data and outputting synchronizing signals at the time when said codes are detected; a quasi frame sync generating unit for generating a quasi frame synchronizing signal in a preset time unit on the basis of said detected frame synchronizing signal; a frame sync window generating unit for generating a frame synchronizing window signal having a preset width on the basis of said quasi frame synchronizing signal; a frame sync discriminating unit for determining whether or not said detected frame synchronizing signal and said quasi frame synchronizing signal exist within a predetermined range of said frame synchronizing window signal and outputting one of said detected and quasi frame synchronizing signals according to the determined results; a frame sync output unit for outputting said detected frame synchronizing signal as a frame synchronizing signal restored if said detected frame synchronizing signal does not exist within a predetermined range of said frame synchronizing window signal and outputting said quasi frame synchronizing signal as a frame synchronizing signal restored if said detected frame synchronizing signal does not exist within a predetermined range of said frame synchronizing window signal; a quasi ID sync generating unit for generating a frame synchronizing signal at a preset time of a series of said restored frame synchronizing signals as a quasi ID synchronizing signal; an ID sync window generating unit for generating an ID synchronizing window signal having a preset width on the basis of said quasi ID synchronising signal; an ID sync discriminating unit for determining whether or not said detected ID synchronizing signal and the quasi ID synchronizing signal exist within a predetermined range of the ID synchronizing window signal and outputting one of the detected and quasi ID synchronizing signals according to the determined results; an ID sync output means for outputting the detected ID synchronizing signal as an ID synchronizing signal restored if the detected ID synchronizing signal and the quasi ID synchronizing signal exist within a predetermined range of the ID synchronizing window signal and outputting the quasi ID synchronizing signal as an ID synchronizing signal restored if the detected ID synchronizing signal and the quasi ID synchronizing signal don't exist within a predetermined range of said ID synchronizing window signal.

Suitably said quasi frame sync generating unit generates an initial quasi frame synchronizing signal on the basis of said detected frame synchronizing signal and then generates a quasi frame synchronizing signal every 1488 T(channel clock).

Suitably, said quasi frame sync generating unit comprises a counter generating the first quasi frame synchronizing signal on the basis of said detected frame synchronizing signal and then generating a quasi frame synchronizing signal every time 1488 is counted by counting 1488 T(channel clock).

Suitably, said frame sync output unit resets said quasi frame sync generating unit so that said quasi frame sync generating unit operates again on the basis of said detected frame synchronizing signal if said quasi frame synchronizing signal is outputted continuously as a restored frame synchronizing signal by a preset number.

Suitably, said quasi ID sync generating unit comprises a counter generating the first quasi ID synchronizing signal on the basis of the 26th restored frame synchronizing signal of a series of said restored frame synchronizing signals and then generating a quasi ID synchronizing signal every time 26 is counted by counting the time required for the output of the second restored frame synchronising signal after the output of the first restored frame synchronizing signal.

Suitably, said ID sync output unit resets said quasi ID sync generating unit so that said quasi ID sync generating unit operates again on a basis of said restored frame synchronizing signal if said quasi ID synchronizing signal is outputted continuously as a restored ID synchronizing signal by a preset number.

According to a third aspect of the present invention, there is provided a sync data restoring method in a DVD playback system, comprising the steps of: detecting a frame synchronizing code and an ID synchronizing code from predetermined EFM plus data and outputting a detected frame synchronizing signal and a detected ID synchronizing signal at the time when said codes are detected; generating a quasi frame synchronizing signal in a preset time unit on the basis of said detected frame synchronizing signal; restoring a frame sync by determining the degree of approximation of said detected frame synchronizing signal to said quasi frame synchronizing signal, selecting any one frame synchronizing signal of said detected frame synchronizing signal and said quasi frame synchronizing signal according to the determined results and outputting said selected one as a frame synchronizing signal restored; generating a quasi ID synchronizing signal in a preset time unit on the basis of a frame synchronizing signal at a preset time of a series of said restored frame synchronizing signals; restoring an ID sync by determining the degree of approximation of said detected ID synchronizing signal to said quasi ID synchronizing signal, selecting any one ID synchronizing signal of said detected ID synchronizing signal and said quasi ID synchronizing signal according to the determined results and outputting the selected one as an ID synchronizing signal restored.

Suitably, said step of restoring a frame sync comprises the steps of;
outputting said detected frame synchronizing signal as a frame synchronizing signal restored if said detected frame synchronizing signal approximates said quasi frame synchronizing signal by a preset width;
outputting said quasi frame synchronizing signal as a frame synchronizing signal restored if said detected frame synchronizing signal does not approximate said quasi frame synchronizing signal by a preset width.

Suitably, said step of restoring a ID sync comprises the steps of;
outputting said detected ID synchronizing signal as an ID synchronizing signal restored if said detected ID synchronizing signal approximates said quasi ID synchronizing signal by a preset width;
outputting said quasi ID synchronizing signal as a ID synchronizing signal restored if said detected ID synchronizing signal does not approximate said quasi ID synchronizing signal by a preset width.

Suitably, said step of generating a quasi frame synchronizing signal comprises a step of generating the first quasi frame synchronizing signal on a basis of said detected frame synchronizing signal and then generating a quasi frame synchronizing signal every 1488 T(channel clock).

Suitably, said method further comprises a step of generating said quasi frame synchronizing signal on the basis of said detected frame synchronizing signal if said quasi frame synchronizing signal is restored continuously as a frame synchronizing signal by a preset number.

Suitably, said step of generating a quasi ID synchronizing signal comprises a step of generating the first quasi ID synchronising signal on the basis of the 26th restored frame synchronizing signal of a series of said restored frame synchronizing signals and then generating a quasi ID synchronizing signal every time 26 is counted by counting the time required for the restoration of the second frame synchronizing signal after the first restoration of a frame synchronizing signal.

Suitably, said method further comprises a step of generating said quasi ID synchronizing signal on a basis of said restored frame synchronizing signal if said quasi ID synchronising signal is restored continuously as an ID synchronizing signal by a preset number.

According to a fourth aspect of the present invention, there is provided a method and apparatus for restoring data recorded on a digital video disc for use in a video disc playback system, comprising determining whether or not sync data is normal using a window signal and restoring quasi sync data as sync data if the sync data is abnormal.

Suitably, the method and apparatus further comprises any one or more of the steps and/or features of the accompanying description, claims, abstract and/or drawings, in any combination.

A more complete appreciation of this invention, and many of the attendant advantages thereof, will be readily apparent as the same becomes better understood by reference to the following detailed description by way of example only when considered in conjunction with the accompanying drawings, in which like reference symbols indicate the same or similar elements components, wherein;
Figure 1 is a block diagram showing the construction of a sync data restoring apparatus in a digital video disc playback system according to an embodiment of the present invention;
Figure 2 is a view showing the order of sync data (frame sync) in a typical digital video disc (DVD) spec;
Figure 3 is a detail view showing the structure of the sync data as shown in Figure 2;
Figure 4 is a timing view showing the timing in the operation of frame synchronizing signals restored by the sync data restoring apparatus as shown in Figure 1 according to an embodiment of the present invention;
Figure 5 is a timing view showing the timing in the operation of ID synchronizing signals restored by the sync data restoring apparatus as shown in Figure 1 according to an embodiment of the present invention.

A preferred embodiment of the present invention will be described in detail with reference to the accompanying drawings. Throughout the drawings, it is noted that the same reference numerals or letters will be used to designate like or equivalent elements having the same function. In the following description, numeral specific details such as components comprising a concrete circuit are set forth to provide a more through understanding of the present invention. It will be apparent, however, to one skilled in the art that the invention may be practised without their specific details. The detailed descriptions on known function and constructions unnecessarily obscuring the subject matter of the present invention will be avoided hereinafter. Technical terms as will be mentioned hereinbelow are terms defined in consideration of the function in the present invention, which may be varied according to the intention of a user and chip designer, so the terms should be construed based on the contents of this specification as a whole.

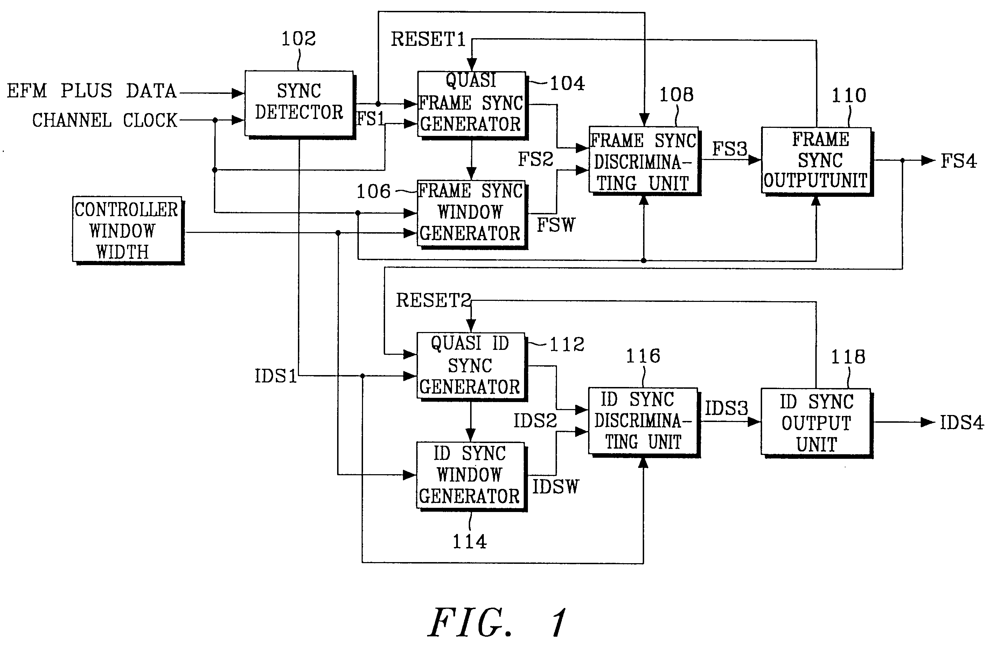

Referring to Figure 1, there is shown a block diagram showing the inner construction of a sync data restoring apparatus in a digital video disc playback system according to an embodiment of the present invention. The sync data restoring apparatus according to the present invention includes a sync detector 102 for detecting a frame synchronizing code and an ID synchronizing code from predetermined EFM(Eight-to-Fourteen Modulation) Plus data, a quasi frame sync generator 104 for executing the operation for the restoration of a frame synchronizing signal, i.e. the operation of determining whether or not the detected frame synchronizing signal is a normal frame synchronizing signal and restoring the normal frame synchronizing signal from the determined results, a frame sync window generator 106, a frame sync discriminating unit 108, a frame sync output unit 110, a quasi ID sync generator 112 for executing the operation for the restoration of a ID synchronizing signal, i.e. the operation of determining whether or not the detected ID synchronizing signal is a normal ID synchronizing signal and restoring the normal ID synchronizing signal from the determined results, an ID sync window generator 114, an ID sync discriminating unit 116 and an ID sync output unit 118.

In Figure 1, a reference symbol, EFM PLUS DATA are the data recorded on a DVD after modulation by a typical modulation technique of a DVD playback apparatus. Reference symbols, FS and IDS are sync data recorded with information data on a DVD. FS designates Frame Synchronization and IDS designates ID Synchronization. The intention of employing the term "quasi" in the example of a quasi frame sync and a quasi ID sync is to indicate the analogous generation of the frame sync and the ID sync different from sync data recorded substantially on a DVD.

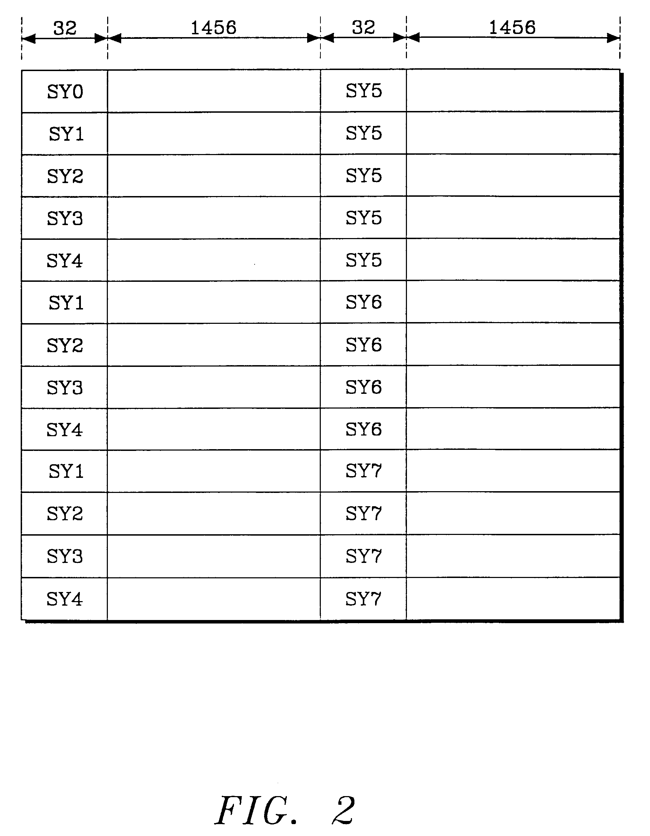

The sync detector 102 detects a frame synchronizing code and an ID synchronizing code from predetermined EFM PLUS DATA applied thereto and outputs a detected frame synchronizing signal FS1 and a detected ID synchronizing signal IDS1 at the time when the codes are detected. The EFM PLUS DATA applied to the sync detector 102 generally has the structure as shown in Figure 2.

Referring to Figure 2, there is a view showing the structure of EFM PLUS DATA in a typical digital video disc playback system. The EFM PLUS DATA comprises 26 sync data(SY0-SY7) and information data, in which each of sync data consists of 32 bits and each of information data consists of 1456 bits. The 26 sync data are arranged in an order ofSY0→SY5→SY1→SY5→SY2→SY5→SY3→.....→SY2→SY7→SY3→SY7→ SY4→SY7. A first sync data SY0 of the 26 sync data is designated an ID synchronizing code and the other 25 sync data are designated as frame synchronizing code.

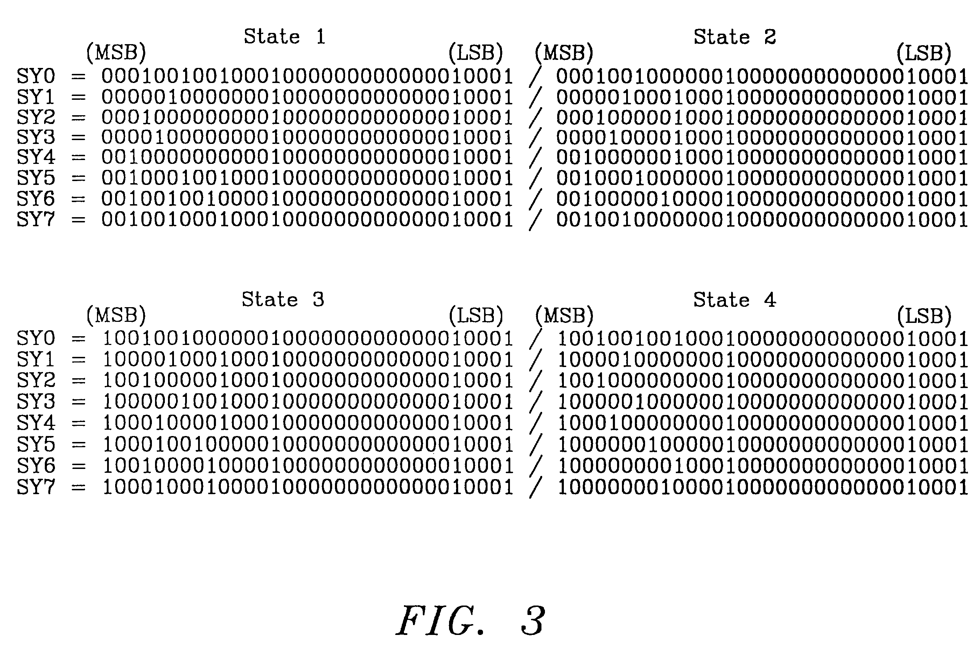

Referring to Figure 3, there is shown a detailed view showing the structure of the sync data shown in Figure 2.

Each of the sync data can consist of any one of 4 state (state 1-state 4) values. That is, in Figure 1, the sync detector 102 detects a frame synchronizing code and an ID synchronizing code from EFM PLUS DATA having the structure shown in Figure 2 and Figure 3 and outputs a detected frame synchronizing signal FS1 and a detected ID synchronizing signal IDS1 at the time when the codes are detected.

In Figure 1, The quasi frame sync generator 104 generates a quasi frame synchronizing signal FS2 in a preset time unit on the basis of the detected frame synchronizing signal FS1 outputted from the sync detector 102. More specifically, the quasi frame sync generator 104 generates the first quasi frame synchronizing signal on the basis of the detected frame synchronizing signal FS1 and then generates a quasi frame synchronizing signal every 1488 T(channel clock). The purpose of generating a quasi frame synchronizing signal is to enable the normal reproduction of information data if the detected frame synchronizing signal detected by the sync detector 102 is abnormal and the quasi frame sync generator 104 can be embodied by a counter for counting 1488. The frame sync window generator 106 generates a frame synchronizing window signal FSW having a preset width at the front and the rear thereof on the basis of the quasi frame synchronizing signal FS2 generated by the quasi frame sync generator 104. The width of the frame synchronizing window signal FSW is set by a control unit (a microcomputer) (not shown) of a DVD playback system.

The frame sync discriminating unit 108 determines the degree of approximation of the detected frame synchronizing signal FS1 generated by the sync detector 102 to the quasi frame synchronizing signal FS2 generated by the quasi frame sync generator 104, selects any one frame synchronizing signal of the detected frame synchronizing signal FS1 and the quasi frame synchronizing signal FS2 according to the determined results and outputs the selected one. At this time, the standard for determining is the frame synchronizing window signal FSW generated by the frame sync window generator 106. The frame sync discriminating unit 108 selects and outputs the detected frame synchronizing signal FS1 if the detected frame synchronizing signal FS1 and the quasi frame synchronizing signal FS2 exist within a predetermined range of the frame synchronizing window signal FSW, and selects and outputs the quasi frame synchronising signal FS2 if the detected frame synchronizing signal FS1 do not exist within a predetermined range of the frame synchronizing window signal FSW. The frame synchronizing signal FS3 selected and outputted by the frame sync discriminating unit 108 is inputted to a frame sync output unit 110, which in turn outputs the inputted frame synchronizing signal FS3 as a restored frame synchronizing signal FS4.

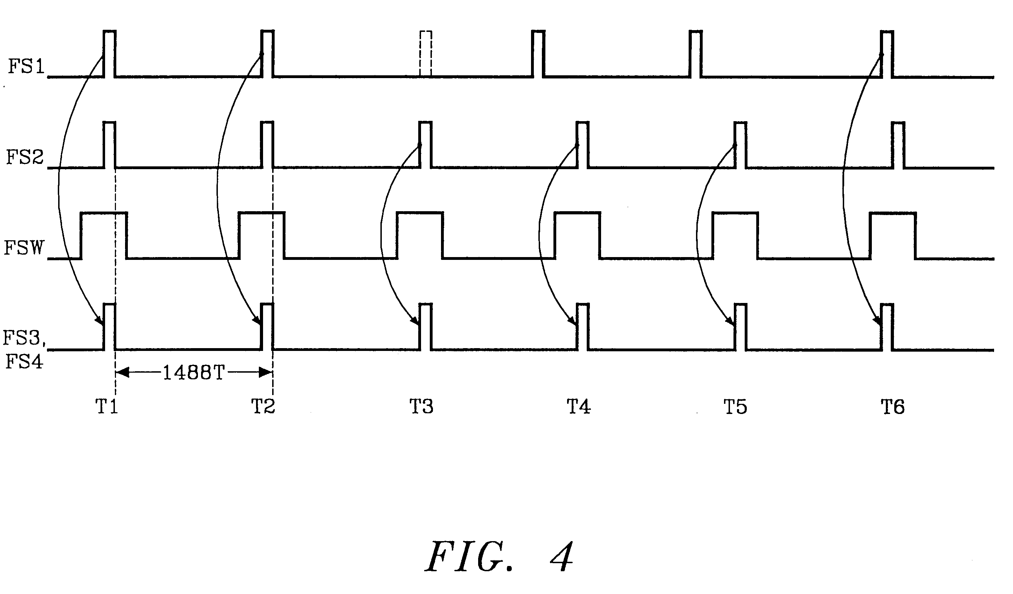

Referring to Figure 4, there is shown a timing view showing the timing in the operation of frame synchronizing signals restored by the quasi frame sync generator 104, the frame sync window generator 106, the frame sync discriminating unit 108 and the frame sync output unit 110 in the sync data restoring apparatus as shown in Figure 1. In Figure 4, the quasi frame sync generator 104 generates the first quasi frame synchronizing signal FS2 on the basis of the detected frame synchronizing signal FS1 at time T1 and then generates a quasi frame synchronizing signal FS2 every time 1488 is counted by counting 1488 T(channel clock). The frame sync window generator 106 generates a frame synchronizing window signal FSW having a preset width at the front and the rear thereof on a basis of the quasi frame synchronizing signal FS2. The width of the frame synchronizing window signal FSW can be preset in 6T, 10T, 12T or 24T by a control (not shown) as described above. The frame sync discriminating unit 108 selects and outputs the detected frame synchronizing signal FS1 if the detected frame synchronising signal FS1 and the quasi frame synchronizing signal FS2 exist within a predetermined range of the frame synchronizing window signal FSW and selects and outputs the quasi frame synchronizing signal FS2 if the detected frame synchronizing signal FS1 and the quasi frame synchronizing FS2 do not exist within a predetermined range of the frame synchronizing window signal FSW(or if the detected frame synchronizing signal FS1 signal don't exist within a predetermined range of the frame synchronizing window signal FSW). The frame sync discriminating unit 108 selects and outputs the detected frame synchronizing signal FS1 since the detected frame synchronizing signal FS1 and the quasi frame synchronising signal FS2 exist within a predetermined range of the frame synchronizing window signal FSW at time T1, T2, T6, T9 and T10, and selects and outputs the quasi frame synchronizing signal FS2 since only the quasi frame synchronizing FS2 signal exists within a predetermined range of the frame synchronizing window signal FSW at time T3, T4 and T5.

As described above, the quasi frame sync generator 104, the frame sync window generator 106, the frame sync discriminating unit 108 and the frame sync output unit 110 execute the operation of determining whether the detected frame synchronizing signal FS1 is normal or not using the frame synchronizing window signal FSW, and restoring the quasi frame synchronizing signal FS2 which can be substituted for the abnormal detected frame synchronizing signal FS1 as frame synchronizing signal since it is impossible to reproduce normally information data if restoring the abnormal detected frame synchronizing signal FS1 when it is determined that the detected frame synchronizing signal FS1 is abnormal.

Meanwhile, there is a possibility that the quasi frame synchronizing signal FS2 will be outputted continuously as a restored frame synchronizing signal FS4, that is the detected frame synchronizing signal continuously exists without a predetermined range of the window, even when it is determined that the detected frame synchronizing signal FS1 is normal, and in order to prevent the continuous output of the quasi frame synchronizing signal FS2, the frame sync output unit 110 resets the frame window to thereby output the detected frame synchronizing signal as a restored frame synchronizing signal if the number of the detected frame synchronizing signal continuously existing without a predetermined range of the frame window is more than the number preset by the microcomputer. That is, the frame sync output unit 110 generates a reset signal RESET 1 to reset the quasi frame sync generator 104. The reset quasi frame sync generator 104 generates the first quasi frame synchronizing signal FS2 on the basis of the detected frame synchronizing signal FS1 and then generates a quasi frame synchronizing signal FS2 every 1488 T(channel clock).

In Figure 1, a quasi ID sync generator 112 generates a frame synchronizing signal at a preset time of a series of the restored frame synchronising signals FS4 as a quasi ID synchronizing signal IDS2 after synchronization of the frame synchronizing signal using the ID synchronizing signal IDS1, in which the frame synchronizing signal at a preset time means the first sync data of the 26 sync data, i.e. ID synchronizing signal. That is, quasi ID sync generator 112 generates the first quasi ID synchronizing signal on a basis of the 26th restored frame synchronizing signal(ID synchronizing signal) of a series of the restored frame synchronizing signals FS4 and then generates a quasi ID synchronizing signal every time 26 is counted(the time when the next ID synchronizing signal is generated after the generation of ID synchronizing signal in case of normal state) by counting the time required for the output of the second restored frame synchronizing signal after the output of the first restored frame synchronizing signal. The quasi ID sync generator 112 can be embodied by a counter for counting 26. ID sync window generator 114 generates an ID synchronizing window signal IDSW having a preset width at the front and rear thereof on a basis of the quasi ID synchronizing signal IDS2 generated by the quasi ID sync generator 112. The width of the ID synchronizing window signal FSW can be set by a control (not shown) in a DVD playback system.

The ID sync discriminating unit 116 determines the degree of approximation of the detected ID synchronizing signal IDS1 generated by the sync detector 102 to the quasi ID synchronizing signal IDS2 generated by the quasi ID sync generator 112, selects any one ID synchronizing signal of the detected ID synchronizing signal IDS1 and the quasi ID synchronizing signal IDS2 according to the determined results and outputs the selected one. At this time, the standard for determining is the ID synchronizing window signal IDSW generated by the ID sync window generator 114. The ID sync discriminating unit 116 selects and outputs the detected ID synchronizing signal IDS1 if the detected ID synchronizing signal IDS1 and the quasi ID synchronizing signal IDS2 exist within a predetermined range of the ID synchronizing window signal FSW, and selects and outputs the quasi ID synchronizing signal FS2 if the detected ID synchronizing signal IDS1 do not exist within a predetermined range of the ID synchronizing window signal IDSW. The ID synchronizing signal IDS3 selected and outputted by the ID sync discriminating unit 116 is inputted to a ID sync output unit 118, which in turn outputs the inputted ID synchronizing signal IDS3 as a restored frame synchronizing signal IDS4.

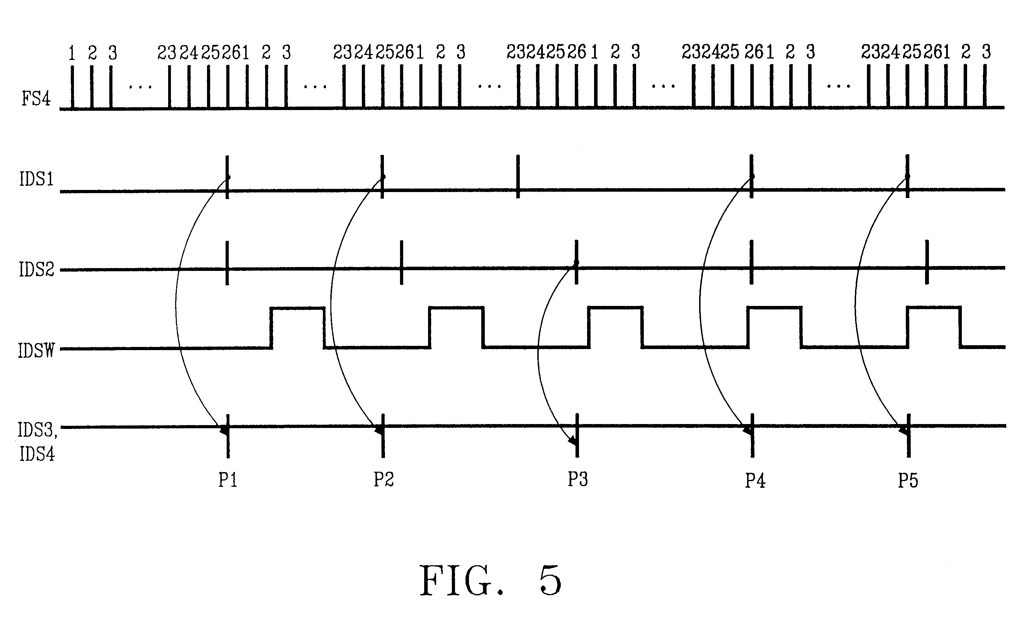

Referring to Figure 5, there is shown a timing view showing the timing in the operation of ID synchronizing signals restored by the quasi ID sync generator 112, the ID sync window generator 114, the ID sync discriminating unit 116 and the ID sync output unit 118 in the sync data restoring apparatus as shown in Figure 1. In Figure 5, the quasi ID sync generator 112 generates the first quasi ID synchronizing signal IDS2 on a basis of the restored frame synchronizing signal FS4 at time P1 and then generates a quasi ID synchronizing signal IDS2 every time 26 is counted. The ID sync window generator 114 generates an ID synchronizing window signal IDSW having a preset width at the front and the rear thereof on the basis of the quasi ID synchronizing signal IDS2. The width of the ID synchronizing window signal IDSW can be preset by a control (not shown) as described above. The ID sync discriminating unit 116 selects and outputs the detected ID synchronizing signal ID1 if the detected ID synchronizing signal IDS1 and the quasi ID synchronizing signal ID2 exist within a predetermined range of the ID synchronizing window signal IDSW and selects and outputs the quasi ID synchronizing signal IDS2 if the detected ID synchronizing signal IDS1 and the quasi ID synchronizing IDS2 do not exist within a predetermined range of the ID synchronizing window signal IDSW(or if the detected ID synchronizing signal IDS1 signal do not exist within a predetermined range of the ID synchronising window signal IDSW). The ID sync discriminating unit 116 selects and outputs the detected ID synchronizing signal IDS1 since the detected ID synchronizing signal IDS1 and the quasi ID synchronizing signal IDS2 exist within a predetermined range of the ID synchronizing window signal IDSW at time P1, P2, P4 and P5, and selects and outputs the quasi ID synchronizing signal IDS2 since only the quasi ID synchronizing IDS2 signal exists within a predetermined range of the ID synchronizing window signal IDSW at time P3.

As described above, the quasi ID sync generator 112, the ID sync window generator 114, the ID sync discriminating unit 116 and the ID sync output unit 118 execute the operation of determining whether the detected ID synchronizing signal IDS1 is normal or not using the ID synchronizing window signal IDSW, and restoring the quasi ID synchronizing signal IDS2 which can be substituted for the abnormal detected ID synchronizing signal IDS1 as ID synchronizing signal since it is impossible to reproduce normally information data if restoring the abnormal detected ID synchronizing signal IDS1 when it is determined that the detected ID synchronizing signal IDS1 is abnormal.

There is a possibility that the quasi ID synchronizing signal IDS2 will be outputted continuously as a restored ID synchronizing signal IDS4 even when it is determined that the detected ID synchronizing signal IDS1 is normal, and in order to prevent the continuous output of the quasi ID synchronizing signal IDS2, the ID sync output unit 118 resets the ID window to thereby output the detected ID synchronizing signal as a restored ID synchronizing signal if the number of the detected ID synchronizing signal continuously existing without a predetermined range of the ID window is more than the number reset by the microcomputer. That is, the ID sync output unit 118 generates a reset signal RESET2 to reset the quasi ID sync generator 112. The reset quasi ID sync generator 112 generates the first quasi ID synchronizing signal FS2 on a basis of the 26th restored ID synchronizing signal FS4 synchronized with the detected ID synchronizing signal IDS1 and then generates a quasi ID synchronizing signal IDS2 every time 26 is counted.

A frame sync continuity checking unit 120 of FIG 1 not described above inputs a synchronizing code detected by the sync detector 102 and discriminates the value of the inputted synchronizing code with the value shown in FIG 3. As a result, the discriminated value thereof is designated one of the 4 state values shown therein. Thereafter, the frame sync continuity checking unit 120 recognizes SY0 as the ID synchronizing code when the value extracted upon discriminating two times more is arranged in an order of SY7→SY0→SY5. That is, the frame sync continuity checking unit 120 is for extracting more reliable ID synchronizing code through checking the synchronizing codes at the front and the rear of the ID synchronizing code. Here, when the detected sync data is arranged in an order of SY4→SY7→SY0→SY5→SY1..., the value of SY4→SY7→SY0 is designated "26". Furthermore, when the value of SY7→SY0→SY5 is designated "1" and the value of SY0→SY5→SY1 is designated "2" so that the value of the sync data of the frame sync continuity checking unit 120 is arranged in an order of 26→1→2, the frame sync continuity checking unit 120 outputs the value of SY0 designated "1" as the detected ID synchronizing code.

As described above, the present invention provides an apparatus which can determines whether sync data is normal or not using a window signal and restore quasi sync data substituted for the abnormal sync data as sync data if sync data is abnormal in DVD playback system, thereby to enable normal reproduction of data despite damaged sync data in a DVD playback system.

While there have been illustrated and described what are considered to be preferred embodiments of the present invention, it will be understood by those skilled in the art that various changes and modifications and equivalents may be substituted for elements thereof without departing from the true scope of the present invention. Therefore, it is intended that the present invention not be limited to the particular embodiments disclosed as the best mode contemplated for carrying out the present invention, but that the present invention embrace all alternatives, modifications and variances falling within the scope of the appended claims.

Briefly, in preferred embodiments, the quasi frame sync generating means generates the first quasi frame synchronizing signal on a basis of the detected frame synchronizing signal and then generates a quasi frame synchronising signal every 1488 T(channel clock). The quasi ID sync generating means generates the first quasi ID synchronizing signal on a basis of the 26th restored frame synchronizing signal of a series of the restored frame synchronizing signals and then generates a quasi ID synchronizing signal every time 26 is counted by counting the time required for the output of the second restored frame synchronizing signal after the output of the first restored frame synchronizing signal. The quasi frame sync generating means and the quasi ID sync generating means can be embodied by counters counting 1488 and 26,

respectively. Meanwhile, the frame sync output means resets the quasi frame sync generating means so that the quasi frame sync generating means operates again on a basis of the detected frame synchronizing signal if the quasi frame synchronizing signal is outputted continuously as a restored frame synchronizing signal by a preset number, and the ID sync output means resets the quasi ID sync generating means so that the quasi ID sync generating means operates again on a basis of the restored frame synchronizing signal if the quasi ID synchronizing signal is outputted continuously as a restored ID synchronizing signal by a preset number.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A sync data restoring apparatus in a DVD playback system, comprising:
a sync detecting unit (102) for detecting a frame synchronizing code word and an ID synchronizing code word from predetermined EFM plus data and outputting a detected frame synchronizing signal and a detected ID synchronizing signal at the time when said codes are detected;
a quasi frame sync generating unit (104) for generating a quasi frame synchronizing signal in a preset time unit on the basis of said detected frame synchronizing signal;
a frame sync restoring unit (108) for determining the degree of approximation of said detected frame synchronizing signal to said quasi frame synchronizing signal, selecting any one frame synchronizing signal of said detected frame synchronizing signal and said quasi frame synchronizing signal according to the determined results and outputting said selected one as a frame synchronizing signal restored;
a quasi ID sync generating unit (112) for generating a quasi ID synchronizing signal in a preset time unit on the basis of a frame synchronizing signal at a preset time of a series of said restored frame synchronizing signals;
an ID sync restoring unit (116) for determining the degree of approximation of said detected ID synchronizing signal to said quasi ID synchronizing signal, selecting any one ID synchronizing signal of said detected ID synchronizing signal and said quasi ID synchronizing signal according to the determined results and outputting said selected one as a ID synchronizing signal restored.

2. An apparatus according to claim 1, wherein said frame sync restoring unit (108) outputs said detected frame synchronizing signal as a frame synchronizing signal restored if said detected frame synchronizing signal approximates said quasi frame synchronizing signal by a preset width and outputs said quasi frame synchronizing signal as a frame synchronizing signal restored if said detected frame synchronizing signal does not approximate said quasi frame synchronizing signal by a preset width.

3. An apparatus according to claim 1 or claim 2, wherein said ID sync restoring unit (116) outputs said detected ID synchronizing signal as an ID synchronizing signal restored if said detected ID synchronizing signal approximates said quasi ID synchronizing signal by a preset width and outputs said quasi ID synchronizing signal as a ID synchronizing signal restored if said detected ID synchronizing signal does not approximate said quasi ID synchronizing signal by a preset width.

4. An apparatus according to any preceding claim, wherein said quasi frame sync generating unit generates the first quasi frame synchronizing signal on the basis of said detected frame synchronizing signal and then generates a quasi frame synchronizing signal every 1488 T(channel clock).

5. An apparatus according to claim 4, wherein said quasi frame sync generating unit (104) comprises a counter generating the first quasi frame synchronizing signal on a basis of said detected frame synchronizing signal and then generating a quasi frame synchronizing signal every time 1488 is counted by counting 1488 T(channel clock).

6. An apparatus according to claim 4 or claim 5, wherein said frame sync restoring unit (108) resets said quasi frame sync generating unit (104) so that said quasi frame sync generating unit (104) operates again on the basis of said detected frame synchronizing signal if said quasi frame synchronizing signal is restored continuously as a frame synchronizing signal by a preset number by a controlling unit.

7. An apparatus according to any preceding claim, wherein said quasi ID sync generating unit (112) comprises a counter generating the first quasi ID synchronizing signal on the basis of the 26th restored frame synchronizing signal of a series of said restored frame synchronizing signals and then generating a quasi ID synchronizing signal every time 26 is counted by counting the time required for the restoration of the second frame synchronizing signal after the first restoration of a frame synchronizing signal.

8. An apparatus according to claim 7, wherein said ID sync restoring unit (116) resets said quasi ID sync generating unit (112) so that said quasi ID sync generating unit (112) operates again on a basis of said restored frame synchronizing signal if said quasi ID synchronizing signal is restored continuously as an ID synchronizing signal by a preset number.

9. A sync data restoring apparatus in a DVD playback system, comprising:
a sync detecting unit (102) for detecting a frame synchronizing code word and an ID synchronizing code word from predetermined EFM plus data and outputting a detected frame synchronizing signal and a detected ID synchronizing signal at the time when said codes are detected;
a quasi frame sync generating unit (104) for generating a quasi frame synchronizing signal in a preset time unit on the basis of said detected frame synchronizing signal;
a frame sync window generating unit (106) for generating a frame synchronizing window signal having a preset width on the basis of said quasi frame synchronizing signal;
a frame sync discriminating unit (108) for determining whether or not said detected frame synchronizing signal and said quasi frame synchronizing signal exist within a predetermined range of said frame synchronizing window signal and outputting one of said detected and quasi frame synchronizing signals according to the determined results;
a frame sync output unit (110) for outputting said detected frame synchronizing signal as a frame synchronizing signal restored if said detected frame synchronizing signal and said quasi frame synchronizing signal exist within a predetermined range of said frame synchronizing window signal and outputting said quasi frame synchronizing signal as a frame synchronizing signal restored if said detected frame synchronising signal and said quasi frame synchronizing signal do not exist within a predetermined range of said frame synchronising window signal;
a quasi ID sync generating unit (112) for generating a frame synchronizing signal at a preset time of a series of said restored frame synchronizing signals as a quasi ID synchronizing signal;
an ID sync window generating unit (114) for generating an ID synchronizing window signal having a preset width on the basis of said quasi ID synchronizing signal;
an ID sync discriminating unit (116) for determining whether or not said detected ID synchronizing signal and said quasi ID synchronizing signal exist within a predetermined range of said ID synchronizing window signal and outputting one of said detected and quasi ID synchronizing signals according to the determined results;
an ID sync output unit (118) for outputting said detected ID synchronizing signal as an ID synchronizing signal restored if said detected ID synchronizing signal and said quasi ID synchronizing signal exist within a predetermined range of said ID synchronizing window signal and outputting said quasi ID synchronizing signal as an ID synchronizing signal restored if said detected ID synchronizing signal and said quasi ID synchronizing signal do not exist within a predetermined range of said ID synchronizing window signal.

10. An apparatus according to claim 9, wherein said quasi frame sync generating unit (104) generates an initial quasi frame synchronizing signal on the basis of said detected frame synchronizing signal and then generates a quasi frame synchronizing signal every 1488 T(channel clock).

11. An apparatus according to claim 10, wherein said quasi frame sync generating unit (104) comprises a counter generating the first quasi frame synchronizing signal on the basis of said detected frame synchronizing signal and then generating a quasi frame synchronizing signal every time 1488 is counted by counting 1488 T(channel clock).

12. An apparatus according to claim 10 or claim 11, wherein said frame sync output unit (110) resets said quasi frame sync generating unit (104) so that said quasi frame sync generating unit (104) operates again on the basis of said detected frame synchronizing signal if said quasi frame synchronizing signal is outputted continuously as a restored frame synchronizing signal by a preset number.

13. An apparatus according to any one of claims 9-12, wherein said quasi ID sync generating unit (112) comprises a counter generating the first quasi ID synchronizing signal on the basis of the 26th restored frame synchronizing signal of a series of said restored frame synchronizing signals and then generating a quasi ID synchronizing signal every time 26 is counted by counting the time required for the output of the second restored frame synchronizing signal after the output of the first restored frame synchronizing signal.

14. An apparatus according to claim 13, wherein said ID sync output unit (118) resets said quasi ID sync generating unit (112) so that said quasi ID sync generating unit (112) operates again on a basis of said restored frame synchronizing signal if said quasi ID synchronizing signal is outputted continuously as a restored ID synchronizing signal by a preset number.

15. A sync data restoring method in a DVD playback system, comprising the steps of:
detecting a frame synchronizing code word and an ID synchronizing code word from predetermined EFM plus data and outputting a detected frame synchronizing signal and a detected ID synchronizing signal at the time when said codes are detected;
generating a quasi frame synchronizing signal in a preset time unit on the basis of said detected frame synchronizing signal;
restoring a frame sync by determining the degree of approximation of said detected frame synchronizing signal to said quasi frame synchronizing signal, selecting any one frame synchronizing signal of said detected frame synchronizing signal and said quasi frame synchronizing signal according to the determined results and outputting said selected one as a frame synchronizing signal restored;
generating a quasi ID synchronizing signal in a preset time unit on the basis of a frame synchronizing signal at a preset time of a series of said restored frame synchronizing signals;
restoring an ID sync by determining the degree of approximation of said detected ID synchronizing signal to said quasi ID synchronizing signal, selecting any one ID synchronising signal of said detected ID synchronizing signal and said quasi ID synchronizing signal according to the determined results and outputting said selected one as an ID synchronizing signal restored.

16. A method according to claim 15, wherein said step of restoring a frame sync comprises the steps of;
outputting said detected frame synchronizing signal as a frame synchronizing signal restored if said detected frame synchronizing signal approximates said quasi frame synchronizing signal by a preset width;
outputting said quasi frame synchronizing signal as a frame synchronizing signal restored if said detected frame synchronizing signal does not approximate said quasi frame synchronizing signal by a preset width.

17. A method according to claim 15 or claim 16, wherein said step of restoring a ID sync comprises the steps of;
outputting said detected ID synchronizing signal as an ID synchronizing signal restored if said detected ID synchronizing signal approximates said quasi ID synchronizing signal by a preset width;
outputting said quasi ID synchronizing signal as a ID synchronising signal restored if said detected ID synchronizing signal does not approximate said quasi ID synchronizing signal by a preset width.

18. A method according to any one of claims 15-17, wherein said Step of generating a quasi frame synchronizing signal comprises a step of generating the first quasi frame synchronizing signal on the basis of said detected frame synchronizing signal and then generating a quasi frame synchronizing signal every 1488 T(channel clock).

19. A method according to claim 18, wherein said method further comprises a step of generating said quasi frame synchronizing signal on the basis of said detected frame synchronizing signal if said quasi frame synchronizing signal is restored continuously as a frame synchronizing signal by a preset number.

20. A method according to any one of claims 15-19, wherein said step of generating a quasi ID synchronizing signal comprises a step of generating the first quasi ID synchronizing signal on the basis of the 26th restored frame synchronizing signal of a series of said restored frame synchronizing signals and then generating a quasi ID synchronizing signal every time 26 is counted by counting the time required for the restoration of the second frame synchronizing signal after the first restoration of a frame synchronizing signal.

21. A method according to claim 20, wherein said method further comprises a step of generating said quasi ID synchronizing signal on the basis of said restored frame synchronizing signal if said quasi ID synchronizing signal is restored continuously as an ID synchronizing signal by a preset number.

22. A method and apparatus for restoring data recorded on a digital video disc for use in a video disc playback system, comprising determining whether or not sync data is normal using a window signal and restoring quasi sync data as sync data if the sync data is abnormal.

23. A method and apparatus according to claim 22, further comprising any one or more of the steps and/or features of the accompanying description, claims, abstract and/or drawings, in any combination.
